# EUROPÄISCHE PATENTSCHRIFT

(11) **EP 0 934 631 B1**
(45) Veröffentlichungstag und Bekanntmachung des Hinweises auf die Patenterteilung: **02.05.2001**
(21) Anmeldenummer: 97909188.1
(22) Anmeldetag: 25.09.1997
(51) Int. Cl.: H04B 1/38

(54) **RUNDFUNKEMPFÄNGER**
RADIO RECEIVER
RECEPTEUR RADIO

(30) Priorität: 15.10.1996 DE 19642452
(43) Veröffentlichungstag der Anmeldung: 11.08.1999
(73) Patentinhaber: ROBERT BOSCH GMBH, 70442 Stuttgart (DE)
(72) Erfinder: MICHALLEK, Norbert, D-31174 Schellerten (DE)
(86) Internationale Anmeldenummer: DE9702174
(87) Internationale Veröffentlichungsnummer: WO9817011

(56) Entgegenhaltungen:
- DE-A- 3 726 784
- GB-A- 2 264 613
- US-A- 5 537 673

## Beschreibung

### Stand der Technik

Die Erfindung geht von einem Rundfunkempfänger nach der Gattung des Hauptanspruchs aus.

Rundfunkempfänger mit einer Tastatur sind auf dem Gebiet der Autoradios seit Jahren bekannt.

Aus der US 5,537,673 ist ein Rundfunkempfänger mit einer Aufnahme für ein Funkgerät bekannt, wobei eine Batterie des Funkgerätes durch eine Ladevorrichtung über eine Schnittstelle in der Aufnahme des Rundfunkempfängers geladen werden kann. Das Funkgerät umfaßt eine Tastatur, an der Befehle eingegeben und über die Schnittstelle an den Rundfunkempfänger übertragen werden können.

### Vorteile der Erfindung

Der erfindungsgemäße Rundfunkempfänger mit den Merkmalen des Hauptanspruchs hat demgegenüber den Vorteil, daß die Funktionalität des Rundfunkempfängers durch Einführen eines Funkgerätes in eine dafür vorgesehene Aufnahme maßgeblich erweitert wird. Die Ergänzung des Rundfunkempfängers mit einer Aufnahme zur Ablage des Funkgerätes und die Ausstattung der Aufnahme mit einer Ladeeinrichtung und einer Schnittstelle zum Anschluß des Funkgerätes stellt zudem keinen nennenswerten zusätzlichen Platzbedarf und Mehraufwand bei der Herstellung dar, ist einfach realisierbar und erfordert keine nennenswerten Zusatzkosten.

Besonders vorteilhaft ist dabei, daß das Funkgerät nicht fest mit dem Rundfunkempfänger verbunden ist, so daß das Funkgerät auch außerhalb des Rundfunkempfängers verwendbar ist. Dies ist vor allem für die Ausbildung des Rundfunkempfängers als Autoradio von Vorteil, wobei der Benutzer durch Entnahme des Funkgerätes aus dem Autoradio auch außerhalb seines Fahrzeuges eine Funkverbindung aufbauen kann, da das Funkgerät auch ohne Verbindung zum Rundfunkempfänger voll funktionsfähig ist.

Ein weiterer Vorteil besteht darin, daß der Rundfunkempfänger als Aufbewahrungsort für das Funkgerät dient, so daß keine separate Halterung erforderlich ist, wodurch Material und Kosten gespart werden.

Vorteilhaft ist auch, daß durch Unterbringung einer Ladeeinrichtung zum Laden eines Akkumulators des Funkgerätes in der Aufnahme auf einfache und wenig aufwendige Weise eine weitere Erhöhung der Funktionalität des Rundfunkempfängers bewirkt wird.

Durch die in den Unteransprüchen aufgeführten Maßnahmen sind vorteilhafte Weiterbildungen und Verbesserungen des im Hauptanspruch angegebenen Rundfunkempfängers möglich.

Vorteilhaft ist die Ausbildung der Aufnahme als Schacht, dessen Abmessungen so gewählt sind, daß das Funkgerät vollständig von der Aufnahme umschließbar ist. Auf diese Weise wird das Funkgerät vor Umwelteinflüssen geschützt und ist besonders platzsparend im Gehäuse des Rundfunkempfängers untergebracht.

Vorteilhaft ist auch die Verwendung einer Abdeckung für die Aufnahme, die klappbar mit dem Rundfunkempfänger verbunden ist. Auf diese Weise wird der Schutz vor Umwelteinflüssen weiter verbessert und außerdem ein Anreiz zum Entwenden des Funkgerätes vermieden, da das Funkgerät nach Abdeckung der Aufnahme von außen unsichtbar im Rundfunkempfänger untergebracht ist.

Vorteilhaft ist die Verwendung eines Verriegelungsmittels zur Arretierung des Funkgerätes in der Aufnahme. Auf diese Weise wird das Funkgerät vor versehentlichem Herausfallen gesichert. Außerdem wird verhindert, daß die Kontaktierung des Funkgerätes mit der Schnittstelle und der Ladeeinrichtung durch ungewolltes Verrutschen des Funkgerätes in der Aufnahme unterbrochen wird.

Vorteilhaft ist die Verwendung der Tastatur sowohl zur Eingabe von Befehlen für das Funkgerät als auch zur Eingabe von Rundfunkempfangsfunktionen. Auf diese Weise wird die Übersichtlichkeit und die Bedienung des Rundfunkempfängers für den Benutzer vereinfacht und gleichzeitig Platz, Material, Aufwand und Kosten eingespart, da die Tastatur multifunktional nutzbar ist.

Ein Vorteil besteht auch darin, daß eine Umschaltung der Tastatur auf die Eingabe von Befehlen für das Funkgerät nur bei in die Aufnahme eingelegtem Funkgerät möglich ist. Auf diese Weise wird die Bedienung für den Benutzer weiter vereinfacht, indem ein funktionsloser Zustand der Tastatur verhindert wird.

Von Vorteil ist auch, daß Informationen über die gewählten Befehle und vom Funkgerät an der Schnittstelle empfangene Daten an der Anzeige des Rundfunkempfängers darstellbar sind. Auf diese Weise ist die Anzeige sowohl für Rundfunkempfangsbetrieb als auch für den Funkbetrieb und somit multifunktional nutzbar. Eine zusätzliche Anzeige ist somit nicht erforderlich, so daß Aufwand, Material, Platz und Kosten eingespart werden.

Vorteilhaft ist auch die Ausbildung der Tastatur als vorzugsweise alphanumerische Zehnertastatur. Auf diese Weise kann auch ein als Funktelefon ausgebildetes Funkgerät auf gewohnte Weise am Rundfunkempfänger bedient werden, so daß Falscheingaben aufgrund von für den Benutzer zum Telefonieren ungewohnten Tastaturen vermieden werden.

Vorteilhaft ist auch die Verbindung der Schnittstelle mit einem Lautsprecher und die akustische Wiedergabe von in der Schnittstelle empfangenen Signalen von dem Funkgerät. Auf diese Weise kann die Tonwiedergabeeinheit des Rundfunkempfängers multifunktional auch zur akustischen Wiedergabe von Funksignalen verwendet werden. Für ein in die Aufnahme eingelegtes Funkgerät kann somit zusätzlich eine Lauthörfunktion bzw. bei vollständig in die Aufnahme eingelegtem Funkgerät und damit verdecktem Funkgerätelautsprecher überhaupt eine Hörfunktion realisiert werden. Vorteilhaft ist auch die Verbindung der Schnittstelle mit einer Freisprechvorrichtung. Auf diese Weise kann bei vollständig in die Aufnahme eingeführtem Funkgerät trotz verdecktem Funkgerätemikrophon eine Spracheingabe realisiert werden.

### Zeichnung

Ein Ausführungsbeispiel der Erfindung ist in der Zeichnung dargestellt und in der nachfolgenden Beschreibung näher erläutert. Es zeigen Figur 1 die Vorderansicht eines erfindungsgemäßen Rundfunkempfängers mit Aufnahmeschacht für ein Funkgerät, Figur 2 einen Querschnitt durch den Rundfunkempfänger in der Höhe des Aufnahmeschachtes bei eingelegtem Funkgerät und Figur 3 ein Blockschaltbild des Rundfunkempfängers.

### Beschreibung des Ausführungsbeispiels

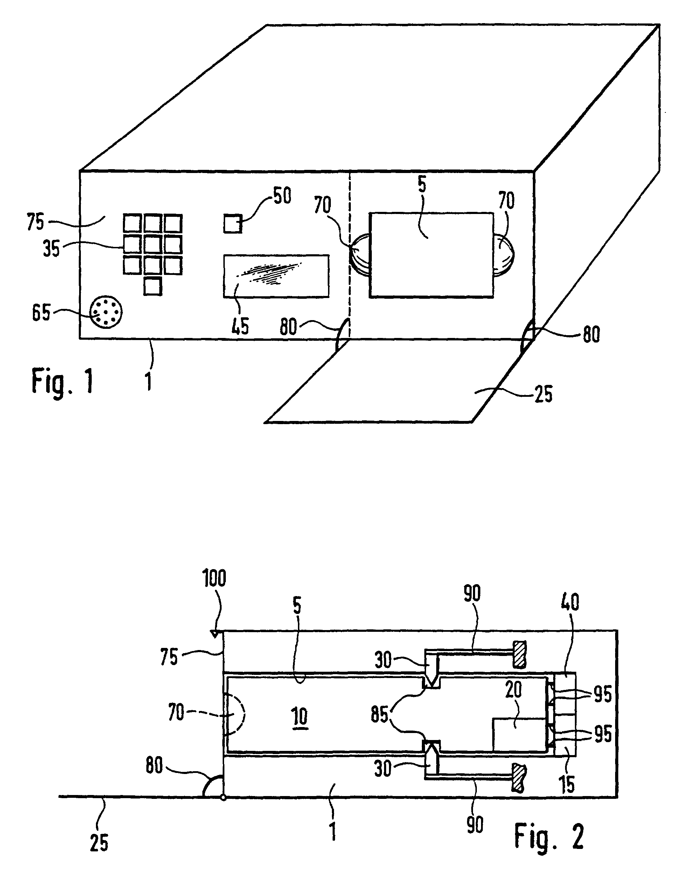

In Figur 1 kennzeichnet 1 einen als Autoradio ausgebildeten Rundfunkempfänger. Der Rundfunkempfänger 1 weist eine Aufnahme 5 zur Aufnahme eines als Funktelefon ausgebildeten Funkgerätes 10 auf. Die Aufnahme 5 ist dabei als Schacht im Rundfunkempfänger 1 ausgebildet, wobei der Schacht einen rechteckförmigen Querschnitt aufweist. An den einander gegenüber liegenden Schmalseiten der rechteckförmigen Öffnung der Aufnahme 5 an der als Bedienoberfläche ausgebildeten Vorderseite 75 des Rundfunkempfängers 1 befindet sich jeweils eine halbkreisförmige Einbuchtung 70, die eine manuelle Entnahme eines vollständig in die Aufnahme 5 eingeführten Funktelefons 10 ermöglicht. Eine Abdeckung 25 ist klappbar über zwei Scharniere 80 mit dem Rundfunkempfänger 1 verbunden. In Figur 1 ist die Abdeckung 25 in geöffnetem Zustand dargestellt. In geschlossenem Zustand verschwinden die Scharniere 80 in nicht dargestellten Öffnungen der Vorderseite 75 des Rundfunkempfängers 1 und die Abdeckung 25 deckt die Aufnahme 5 und die Einbuchtungen 70 vollständig ab. In dem durch die Abdeckung 25 nicht abdeckbaren Teil der Vorderseite 75 befindet sich eine Anzeige 45, eine Taste 50 und eine Zehnertastatur 35. Außerdem ist auf der Vorderseite 75 eine Freisprechvorrichtung 65 angeordnet.

Figur 2 zeigt einen Querschnitt durch den Rundfunkempfänger 1 in Höhe der Aufnahme 5. Dabei ist die Abdeckung 25 wieder in geöffnetem Zustand dargestellt. In die Aufnahme 5 ist ein Funktelefon 10 vollständig eingeführt. Das Funktelefon 10 wird von der Aufnahme 5 vollständig umschlossen. Lediglich über die Einbuchtungen 70 ist das Funktelefon 10 an seinen Seitenflächen greifbar und somit aus der Aufnahme 5 entfernbar. Das Funktelefon 10 weist an seiner Ober- und an seiner Unterseite jeweils eine Vertiefung 85 auf, in die jeweils ein Zapfen 30 als Verriegelungsmittel eingreift. Dabei sind die beiden Zapfen 30 jeweils in Einschub- und Entnahmerichtung des Funktelefons 10 an ihrem dem Funktelefon 10 zugewandten Ende abgeschrägt. An ihrem jeweils anderen Ende sind sie jeweils mit einer Blattfeder 90 verbunden. Die beiden Blattfedern 90 sind fest im Rundfunkempfänger montiert. An dem der Vorderseite 75 abgewandten Ende der Aufnahme 5 sind im Rundfunkempfänger 1 eine Schnittstelle 40 und eine Ladeeinrichtung 15 untergebracht, die bei vollständig in die Aufnahme 5 eingeführtem Funktelefon 10 über jeweils zwei Kontakte 95 mit dem Funktelefon 10 elektrisch leitend verbunden sind. Je nach Bedarf können für die jeweilige Kontaktierung auch mehr Kontakte vorgesehen sein. Dabei kontaktiert die Ladeeinrichtung 15 direkt mit einem im Funktelefon 10 untergebrachten Akkumulator 20. An der Oberkante der Vorderseite 75 ist eine federnde Halterung 100 angebracht, die auf ihrer der Aufnahme 5 zugewandten Seite ebenfalls in Einschub- und Entnahmerichtung des Funktelefons 10 abgeschrägt ist. Bei geöffneter Abdeckung 25 wird das Funktelefon 10 in die Aufnahme 5 eingeführt bzw. aus der Aufnahme 5 entnommen. Beim Schließen der Abdeckung 25 federt die Halterung 100 zunächst nach oben weg, bis die Abdeckung 25 sich zwischen der Halterung 100 und der Vorderseite 75 befindet und die Halterung 100 wieder zurückfedern kann. Beim Öffnen der Abdeckung 25 federt die Halterung 100 zunächst wieder nach oben weg, bis die Abdeckung 25 die Halterung 100 vollständig passiert hat, so daß sie wieder zurückfedern kann. Beim Einschub des Funktelefons 10 werden die Zapfen 30 durch das Funktelefon 10 zunächst nach oben und nach unten weggedrückt bis das Funktelefon 10 vollständig in die Aufnahme 5 eingeführt ist und mit der Schnittstelle 40 und der Ladeeinrichtung 15 kontaktiert, wobei die Zapfen 30 in die Vertiefungen 85 federnd einrasten. Bei Entnahme des Funktelefons 10 werden die Zapfen 30 wiederum nach oben bzw. unten weggedrückt, so daß die Verriegelung aufgehoben wird und das Funktelefon 10 mühelos entnommen werden kann.

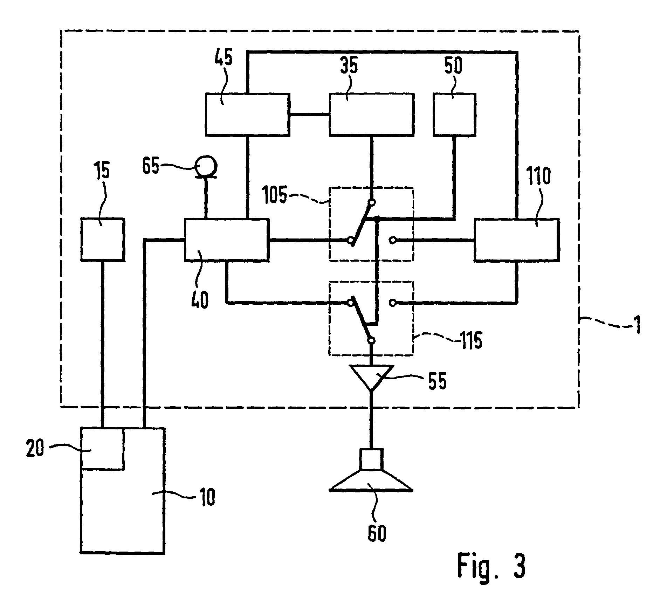

In Figur 3 ist ein Blockschaltbild des Rundfunkempfängers 1 dargestellt. Bei in die Aufnahme 5 eingeführtem Funktelefon 10 ist das Funktelefon 10 mit der Ladeeinrichtung 15 und der Schnittstelle 40 verbunden. An die Schnittstelle 40 ist außerdem die Freisprechvorrichtung 65 und die Anzeige 45 angeschlossen. Die Schnittstelle 40 ist weiterhin mit einer ersten Schaltvorrichtung 105 und mit einer zweiten Schaltvorrichtung 115 verbunden. Über die erste Schaltvorrichtung 105 ist die Schnittstelle 40 mit der Zehnertastatur 35 verbindbar und über die zweite Schaltvorrichtung 115 ist die Schnittstelle 40 über einen Niederfrequenz-Verstärker 55 mit einem Lautsprecher 60 verbindbar. Die Zehnertastatatur 35 ist ebenfalls mit der Anzeige 45 verbunden. Der Rundfunkempfangsteil 110 des Rundfunkempfängers 1 ist an die Anzeige 45, an die erste Schaltvorrichtung 105 und an die zweite Schaltvorrichtung 115 angeschlossen. Über die erste Schaltvorrichtung 105 ist der Rundfunkempfangsteil 110 mit der Zehnertastatur 35 verbindbar und über die zweite Schaltvorrichtung 115 ist der Rundfunkempfangsteil 110 über den Niederfrequenz-Verstärker 55 mit dem Lautsprecher 60 verbindbar. Die Umschaltung der ersten Schaltvorrichtung 105 und der zweiten Schaltvorrichtung 115 erfolgt gleichzeitig durch die Taste 50. In einer ersten Schalterstellung ist die Schnittstelle 40 über die erste Schaltvorrichtung 105 mit der Zehnertastatur 35 und über die zweite Schaltvorrichtung 115 mit dem Niederfrequenz-Verstärker 55 verbunden. In einer zweiten Schalterstellung ist der Rundfunkempfangsteil 110 über die erste Schaltvorrichtung 105 mit der Zehnertastatur 35 und über die zweite Schaltvorrichtung 115 mit dem Niederfrequenz-Verstärker 55 verbunden.

Über die Zehnertastatur 35 sind Befehle am Rundfunkempfänger eingebbar. Diese Befehle werden bei der ersten Schalterstellung über die Schnittstelle 40 an das angeschlossene Funktelefon 10 übertragen und dienen zur Realisierung von Fernsprechfunktionen, wie beispielsweise der Anwahl eines Teilnemers, der Kurzwahl eines Teilnehmers aus einem in Figur 3 nicht dargestellten Rufnummernspeicher, der Wahlwiederholung oder dergleichen. Zur Realisierung verschiedener Fernsprechfunktionen sind ggf. noch weitere Tasten an der Vorderseite 75 des Rundfunkempfängers 1 vorzusehen, wie beispielsweise eine Sterntaste, eine Rautentaste, eine Wahlwiederholungstaste oder dergleichen. Die an der Zehnertastatur 35 eingegebenen Befehle werden zur Kontrolle für den Bediener an der Anzeige 45 dargestellt. So kann an der Anzeige 45 beispielsweise die gerade eingegebene Rufnummer, ein eingegebenes Kurzwahlziel oder dergleichen angezeigt werden. Gleichzeitig können über die Schnittstelle 40 an der Anzeige 45 auch vom Funktelefon 10 empfangene Daten zur Darstellung gebracht werden, beispielsweise die Nummer des Teilnehmeranschlusses eines rufenden Teilnehmers. Eine Erweiterung des Funktionsumfangs der Zehnertastatur 35 für den Fernsprechbetrieb bzw. den Rundfunkempfangsbetrieb ist auch durch Ausbildung der Zehnertastatur 35 als alphanumerische Tastatur möglich. Zur Umschaltung zwischen Buchstaben und Zahleneingabe ist ggf. eine weitere Taste an der Vorderseite 75 des Rundfunkempfängers 1 vorzusehen. Da bei in die Aufnahme 5 eingeführtem Funktelefon 10 weder das Mikrophon noch der Lautsprecher des Funktelefons 10 von außen zugänglich ist, erfolgt die Spracheingabe über die Freisprechvorrichtung 65 und die Sprachwiedergabe über den Lautsprecher 60 des Rundfunkempfängers 1. Dabei kann der Rundfunkempfänger 1 auch mehrere Lautsprecher umfassen, die zur Wiedergabe im Fernsprechbetrieb dienen. Über die Ladeeinrichtung 15 wird der Akkumulator 20 des Funktelefons 10 bei in die Aufnahme 5 eingeführtem Funktelefon 10 aufgeladen.

Bei in die Vertiefungen 85 eingerasteten Zapfen 30 ist das Funktelefon 10 vor Herausfallen und Kontaktverlust mit der Ladeeinrichtung 15 und der Schnittstelle 40 gesichert. Dazu muß die Federkraft der beiden Blattfedern 90 so groß sein, daß die Zapfen 30 nicht durch das Eigengewicht des Funktelefons 10 nach oben bzw. unten vom Funktelefon 10 weggedrückt werden können. Zur Einführung bzw. Entnahme des Funktelefons 10 in bzw. aus der Aufnahme 5 ist daher eine Kraft erforderlich, die größer als die Gewichtskraft des Funktelefons 10 ist. Als Verriegelungsmittel 30 zur Arretierung des Funktelefons 10 in der Aufnahme 5 ist auch ein Wendeherz-Mechanismus oder eine elektromagnetische Vorrichtung verwendbar.

Über die Taste 50 kann zwischen der ersten und der zweiten Schalterstellung umgeschaltet werden. Eine Umschaltung zur Verbindung der Schnittstelle 40 mit der Zehnertastatur 35 und dem Niederfrquenz-Verstärker 55 ist jedoch nur möglich, wenn das Funkgerät 10 vollständig in die Aufnahme 5 eingeführt ist und mit der Schnittstelle 40 kontaktiert. Auf diese Weise wird verhindert, daß bei nicht in die Aufnahme 5 eingeführtem Funktelefon 10 die Zehnertastatur 35 in einen funktionslosen Zustand geschaltet wird. Wird über die Taste 50 die zweite Schalterstellung eingestellt, so können an der Zehnertastatur 35 Rundfunkempfangsfunktionen, wie beispielsweise Frequenzeingabe, Empfangsbereichswahl oder dergleichen durchgeführt und an der Anzeige 45 angezeigt werden. An der Anzeige 45 wird dann beispielsweise die eingegebene Frequenz, der gewählte Empfangsbereich, wie UKW, MW, usw. oder dergleichen angezeigt. Die Rundfunkempfangswiedergabe erfolgt dann ebenfalls durch den Lautsprecher 60 oder ggf. durch mehrere Lautsprecher.

Will der Benutzer beim Verlassen seines Fahrzeugs weiterhin mobil telefonieren können, so entnimmt er das Funktelefon 10 aus der Aufnahme 5 und verfügt somit, unabhängig vom Rundfunkempfänger 1, über ein voll funktionsfähiges Funktelefon. Reicht die Tastatur an der Vorderseite 75 des Rundfunkempfängers 1 für die zu realisierenden Fernsprech- und/oder Rundfunkempfangsfunktionen nicht aus, so sind weitere Tasten an der Vorderseite 75 vorzusehen.

## Patentansprüche

1. Rundfunkempfänger (1), vorzugsweise Autoradio, mit einer Tastatur (35) und einer Aufnahme (5) zur Ablage eines vorzugsweise als Funktelephon ausgebildeten Funkgerätes (10), wobei die Aufnahme (5) eine Ladeeinrichtung (15) zum Laden eines Akkumulators (20) des Funkgerätes (10) umfaßt, wobei mit der Tastatur (35) Befehle am Rundfunkempfänger (1) eingebbar sind und in der Aufnahme (5) eine Schnittstelle (40) vorgesehen ist, dadurch gekennzeichnet, daß mit der Tastatur (35) am Rundfunkempfänger (1) eingegebene Befehle durch die Schnittstelle (40) an das Funkgerät (10) übertragbar sind.

2. Rundfunkempfänger (1) nach Anspruch 1, dadurch gekennzeichnet, daß die Aufnahme (5) als Schacht ausgebildet ist, dessen Abmessungen so gewählt sind, daß das Funkgerät (10) vollständig von der Aufnahme (5) umschließbar ist.

3. Rundfunkempfänger (1) nach Anspruch 1 oder 2, dadurch gekennzeichnet, daß eine Abdeckung (25) für die Aufnahme (5) vorgesehen ist, die klappbar mit dem Rundfunkempfänger (1) verbunden ist.

4. Rundfunkempfänger (1) nach Anspruch 1, 2 oder 3, dadurch gekennzeichnet, daß die Aufnahme (5) zumindest ein Verriegelungsmittel (30) zur Arretierung des Funkgeräts (10) aufweist.

5. Rundfunkempfänger (1) nach einem der vorherigen Ansprüche, dadurch gekennzeichnet, daß mit der Tastatur (35) Rundfunkempfangsfunktionen eingebbar sind und daß eine Taste (50) vorgesehen ist, durch deren Betätigung eine Umschaltung der Tastatur (35) zwischen Rundfunkempfangsfunktionen und Befehlen für das Funkgerät erfolgt.

6. Rundfunkempfänger (1) nach Anspruch 5, dadurch gekennzeichnet, daß eine Umschaltung der Tastatur (35) des Rundfunkempfängers (1) auf die Eingabe von Befehlen für das Funkgerät (10) nur bei in die Aufnahme (5) eingelegtem Funkgerät (10) möglich ist.

7. Rundfunkempfänger (1) nach einem der vorherigen Ansprüche, dadurch gekennzeichnet, daß Informationen über die gewählten Befehle, insbesondere für einen Aufbau einer Funkverbindung, an einer Anzeige (45) des Rundfunkempfängers (1) darstellbar sind.

8. Rundfunkempfänger (1) nach Anspruch 7, dadurch gekennzeichnet, daß in der Schnittstelle (40) Daten des in die Aufnahme (5) eingeführten Funkgeräts (10) empfangbar und zur Darstellung an die Anzeige (45) weiterleitbar sind.

9. Rundfunkempfänger (1) nach einem der vorherigen Ansprüche, dadurch gekennzeichnet, daß die Tastatur (35) als vorzugsweise alphanumerische Zehnertastatur ausgebildet ist.

10. Rundfunkempfänger (1) nach einem der vorherigen Ansprüche, dadurch gekennzeichnet, daß die Schnittstelle (40) vorzugsweise über einen Niederfrequenzverstärker (55) mit mindestens einem Lautsprecher (60) verbindbar ist und daß in der Schnittstelle (40) empfangene Signale von dem Funkgerät (10) akustisch vom Lautsprecher (60) wiedergebbar sind.

11. Rundfunkempfänger (1) nach einem der vorherigen Ansprüche, dadurch gekennzeichnet, daß die Schnittstelle (40) mit einer Freisprechvorrichtung (65) verbunden ist.

## Claims

1. Radio receiver (1), preferably car radio, having a keypad (35) and a receptacle (5) for storing a radio set (10), preferably in the form of a radio telephone, the receptacle (5) comprising a charging device (15) for charging a storage battery (20) in the radio set (10), the keypad (35) being capable of being used to enter instructions on the radio receiver (1), and an interface (40) being provided in the receptacle (5), characterized in that the keypad (35) can be used to transmit instructions entered on the radio receiver (1) to the radio set (10) via the interface (40).

2. Radio receiver (1) according to Claim 1, characterized in that the receptacle (5) is in the form of a channel whose dimensions are selected such that the radio set (10) can be completely enclosed by the receptacle (5).

3. Radio receiver (1) according to Claim 1 or 2, characterized in that a cover (25) for the receptacle (5) is provided which is hinged to the radio receiver (1).

4. Radio receiver (1) according to Claim 1, 2 or 3, characterized in that the receptacle (5) has at least one locking means (30) for locking the radio set (10) .

5. Radio receiver (1) according to one of the preceding claims, characterized in that the keypad (35) can be used to enter radio reception functions, and in that a key (50) is provided which, when actuated, causes the keypad (35) to change over between radio reception functions and instructions for the radio set.

6. Radio receiver (1) according to Claim 5, characterized in that the keypad (35) on the radio receiver (1) can be changed over to entry of instructions for the radio set (10) only when the radio set (10) has been placed into the receptacle (5).

7. Radio receiver (1) according to one of the preceding claims, characterized in that information about the selected instructions, particularly for setting up a radio link, can be shown on a display (45) on the radio receiver (1).

8. Radio receiver (1) according to Claim 7, characterized in that the interface (40) can receive data from the radio set (10) inserted into the receptacle (5) and can forward it to the display (45) in order for it to be shown.

9. Radio receiver (1) according to one of the preceding claims, characterized in that the keypad (35) is in the form of a preferably alphanumeric decimal keypad.

10. Radio receiver (1) according to one of the preceding claims, characterized in that the interface (40) can be connected to at least one loudspeaker (60), preferably via a low-frequency amplifier (55), and in that signals received in the interface (40) from the radio set (10) can be audibly reproduced by the loudspeaker (60).

11. Radio receiver (1) according to one of the preceding claims, characterized in that the interface (40) is connected to a hands-free apparatus (65).

## Revendications

1. Récepteur radio (1), de préférence autoradio comportant un clavier (35) et un logement (5) pour recevoir un appareil radio (10), de préférence un radiotéléphone, le logement (5) comportant un chargeur (15) pour charger l'accumulateur (20) de l'appareil radio (10),
le clavier (35) permettant d'introduire des ordres pour le récepteur radio (1) et le logement (5) comportant une interface (40),
caractérisé en ce que
le clavier (35) du récepteur radio (1) permet de transmettre les ordres introduits, par l'interface (40), jusqu'à l'appareil radio (10).

2. Récepteur radio (1) selon la revendication 1,
caractérisé en ce que
le logement (5) est une cavité dont les dimensions sont choisies pour que ce logement (5) entoure complètement l'appareil radio (10).

3. Récepteur radio (1) selon la revendication 1 ou 2,
caractérisé par
un couvercle (25) pour le logement (5), ce couvercle étant articulé au récepteur radio (1).

4. Récepteur radio (1) selon les revendications 1, 2, 3,
caractérisé en ce que
le logement (5) comporte au moins un moyen de verrouillage (30) pour bloquer l'appareil radio (10).

5. Récepteur radio (1) selon l'une des revendications précédentes,
caractérisé en ce que
le clavier (35) permet d'introduire des fonctions de réception radio, et une première touche (50) est prévue pour que son actionnement permette de commuter le clavier (35) entre les fonctions de réception radio et les ordres pour l'appareil radio.

6. Récepteur radio (1) selon la revendication 5,
caractérisé en ce que
la commutation du clavier (35) du récepteur radio (1) pour l'introduction d'ordres pour l'appareil radio (10), n'est possible que si l'appareil radio (10) est placé dans son logement (5).

7. Récepteur radio (1) selon l'une des revendications précédentes,
caractérisé en ce que
les informations concernant les ordres sélectionnés, notamment pour établir une liaison téléphonique, sont affichées sur un afficheur (45) du récepteur radio (1).

8. Récepteur radio (1) selon la revendication 7,
caractérisé en ce que
l'interface (40) permet de recevoir les données de l'appareil radio (10) placé dans son logement (5), et de les transmettre à l'afficheur (45) pour les afficher.

9. Récepteur radio (1) selon l'une des revendications précédentes,
caractérisé en ce que
le clavier (35) est un clavier alphanumérique décimal.

10. Récepteur radio (1) selon l'une des revendications précédentes,
caractérisé en ce que
l'interface (40) est reliée de préférence par un amplificateur basse fréquence (55) à au moins un haut-parleur (60), et les signaux arrivant dans l'interface (40) et provenant de l'appareil radio (10) sont reproduits de manière sonore par les haut-parleurs (60).

11. Récepteur radio (1) selon l'une des revendications précédentes,
caractérisé en ce que
l'interface (40) est reliée à un dispositif « main libre » (65) .
